# EUROPÄISCHE PATENTSCHRIFT

(11) **EP 3 298 684 B1**
(45) Veröffentlichungstag und Bekanntmachung des Hinweises auf die Patenterteilung: **26.02.2020**
(21) Anmeldenummer: 16717288.1
(22) Anmeldetag: 06.04.2016
(51) Int. Cl.: H02P 1/00, H02M 7/797

(54) **SCHALTUNGSANORDNUNG UND ELEKTRISCHE MASCHINE MIT EINER PLC-ANSTEUERUNG**
CIRCUIT ARRANGEMENT AND ELECTRIC MACHINE HAVING A PLC CONTROLLER
DISPOSITIF DE COMMUTATION ET MACHINE ÉLECTRIQUE MUNIE D'UNE COMMANDE PAR API

(30) Priorität: 19.05.2015 DE 102015209103
(43) Veröffentlichungstag der Anmeldung: 28.03.2018
(73) Patentinhaber: Robert Bosch GmbH, 70442 Stuttgart (DE)
(72) Erfinder: BUSS, Heiko, 370 04 Ceske Budejovice (CZ); KUEHN, Timo, 76470 Oetigheim (DE)
(86) Internationale Anmeldenummer: PCT/EP2016/057542
(87) Internationale Veröffentlichungsnummer: WO 2016/184601

(56) Entgegenhaltungen:
- EP-A1- 2 852 069
- WO-A1-2010/147564
- CN-U- 203 457 151
- DE-A1- 19 963 817
- DE-A1-102012 207 689
- JP-B1- 5 714 158
- US-A1- 2011 264 316

## Beschreibung

### Stand der Technik

Die Erfindung betrifft eine Schaltungsanordnung zum Ansteuern einer elektrischen Maschine, insbesondere einem Elektromotor und/oder einem Generator.

Die Schaltungsanordnung weist wenigstens ein Leistungsmodul und eine Verarbeitungseinheit auf. Das Leistungsmodul weist wenigstens eine Halbleiterschalter-Halbbrücke auf, welche mit einem Ausgangsanschluss für eine Statorspule verbunden ist. Die Verarbeitungseinheit ist ausgebildet, die Halbbrücken zum Bestromen des Stators der elektrischen Maschine zum Erzeugen eines magnetischen Drehfeldes anzusteuern. Dazu ist die Verarbeitungseinheit ausgebildet, wenigstens ein Steuersignal, oder nur ein Steuersignal, oder eine zeitliche Folge von Steuersignalen zu erzeugen.

Aus der DE 10 2006 009 563 A1 ist eine Schaltungsanordnung bekannt, bei der ein EEPROM-Speicher eines elektronisch kommutierter Elektromotors über eine Netzzuleitung programmiert werden kann.

Die Offenlegungsschrift DE102012207689A1 offenbart eine Schaltungsanordnung zum Ansteuern einer elektrischen Maschine über drei jeweils aus zwei Halbleiterschaltern bestehenden Halbbrücken, die an drei Statorspulen angeschlossen sind und einer Versarbeitungseinheit, die zur Erzeugung eines magnetischen Drehfeldes Steuersignale and die Halbleiterschalter sendet.

### Offenbarung der Erfindung

Erfindungsgemäß ist die Verarbeitungseinheit mit dem Leistungsmodul über eine Spannungsversorgungsleitung verbunden. Die Schaltungsanordnung weist auch einen mit der Verarbeitungseinheit verbundenen Modulator auf. Der Modulator ist ausgebildet, ein Trägersignal zu erzeugen und das Steuersignal auf das Trägersignal aufzumodulieren und das aufmodulierte Trägersignal in die Spannungsversorgungsleitung einzuspeisen. Die Schaltungsanordnung weist auch wenigstens einen mit dem Leistungsmodul verbundenen Modulator auf, welcher eingangsseitig mit der Spannungsversorgungsleitung verbunden ist und ausgebildet ist, das Steuersignal aus dem aufmodulierten Trägersignal zu demodulieren und an die Halbleiterschalter-Halbbrücke zu senden, und zur Amplitudenmodulation ausgebildet ist.

Dadurch kann das Leistungsmodul mit dem von der Verarbeitungseinheit erzeugten Steuersignal, beispielsweise einem PWM-Signal (PWM = Puls-Weiten-Modulation), oder Blockkommutierungssignal, angesteuert werden.

Vorteilhaft können so elektrische Verbindungsleitungen zwischen der Verarbeitungseinheit und den Leistungsmodulen eingespart werden.

Bevorzugt ist das Steuersignal ein Steuersignal zum Steuern eines Halbleiterschalters des Leistungsmoduls, insbesondere ein Gate-Steuersignal zum Ansteuern eines Feldeffekttransistors oder ein Steuersignal zum Ansteuern eines IGBT-Transistors. Das Steuersignal kann so das erwähnte PWM-Signal oder Blockkommutierungssignal bilden.

In einer anderen Ausführungsform repräsentiert das Steuersignal einen Duty-Cycle-Wert eines zu erzeugenden PWM-Signals, welcher einen Anteil - insbesondere zwischen Null und 100 Prozent - eines Rechteck-Signals einer PWM-Periode repräsentiert. Das Leistungsmodul ist in dieser Ausführungsform bevorzugt ausgebildet, das PWM-Signal in Abhängigkeit des übermittelten Duty-Cycle-Wert zu erzeugen. Dazu weist das Leistungsmodul bevorzugt einen PWM-Modulator zum Erzeugen des PWM-Signals auf. Der PWM Modulator ist bevorzugt ausgebildet, ein PWM-Taktsignal, das die PWM-Periode repräsentiert, aus einem von dem PLC-Modulator erzeugten Trägersignal zu erzeugen. Dadurch kann eine Bandbreite zur PLC-Übertragung vorteilhaft kleiner ausgebildet sein verglichen mit einer Übertragung des PWM-Signals als aufmoduliertes Signal.

Der Ausgangsanschluss ist bevorzugt ausgebildet, mit der elektrischen Maschine, insbesondere dem Stator der elektrischen Maschine, und dort einer Statorspule verbunden zu werden. Bevorzugt sind die Verarbeitungseinheit und das Leistungsmodul jeweils ausgebildet, eine Versorgungsspannung über die Spannungsversorgungsleitung zu empfangen.

In einer bevorzugten Ausführungsform ist die Verarbeitungseinheit mit der Spannungsversorgungsleitung zum Empfangen einer Versorgungsspannung verbunden, weiter bevorzugt ist die Leistungsendstufe mit der Spannungsversorgungsleitung zum Empfangen einer Versorgungsspannung verbunden. So kann der Modulator vorteilhaft in der Leistungsendstufe, insbesondere dem Leistungsmodul, mit einem elektrischen Anschluss zum Empfangen einer Versorgungsspannung verbunden sein. Der Modulator der Verarbeitungseinheit kann vorteilhaft zusammen mit der Verarbeitungseinheit in einem integrierten Schaltkreis integriert sein. Die Verarbeitungseinheit ist beispielsweise durch einen Mikroprozessor, einen Mikrocontroller, ein FPGA (FPGA = Field-Programmable-Gate-Array) oder ein ASIC (ASIC = Application-Specific-Integrated-Circuit) gebildet. Vorteilhaft kann so durch die Integration des Modulators in den integrierten Schaltkreis, welcher die Verarbeitungseinheit, insbesondere den Mikroprozessor oder den Mikrocontroller aufweist, vorteilhaft steueranschlusslos ausgebildet sein, da so das Steuersignal vorteilhaft über den Anschluss zum Empfangen der Versorgungsspannung ausgegeben werden kann. Weiter vorteilhaft können bei einem integrierten Schaltkreis so elektrische Anschlüsse eingespart werden.

In einer bevorzugten Ausführungsform weist das Leistungsmodul einen Treiber, insbesondere Gate-Treiber, auf, welcher ausgangsseitig mit Steueranschlüssen der Halbleiterschalter-Halbbrücke verbunden ist und welcher ausgebildet ist, ein Steuersignal zum Sperren oder Durchschalten der Halbleiterschalter der Halbleiterschalter-Halbbrücke - bevorzugt in Abhängigkeit des eingangsseitig von dem Modulator empfangenen, demodulierten Steuersignals - zu erzeugen und das Steuersignal zum Ansteuern der Halbleiterschalter-Halbbrücke ausgangsseitig auszugeben.

Die Halbleiterschalter der Halbleiterschalter-Halbbrücke können so vorteilhaft mit einem potentialangepassten Ansteuersignal sicher durchgesteuert oder gesperrt werden.

In einer bevorzugten Ausführungsform weist die Schaltungsanordnung für jede Phase einer mehrphasigen Ansteuerung, ein Leistungsmodul, und für jedes Leistungsmodul einen wenigstens zur Demodulation ausgebildeten Modulator auf. Vorteilhaft kann so für jede Statorspule der elektrischen Maschine, welche eine Phase bildet, ein gesondertes Leistungsmodul zugeordnet sein, sodass eine elektrische Verbindung des Ausgangs des Leistungsmoduls zu der Statorspule hin vorteilhaft möglichst kurz ausgebildet sein kann.

Bevorzugt ist der Modulator zur Frequenzmodulation oder zur Amplitudenmodulation ausgebildet. Vorteilhaft kann mittels der Frequenzmodulation des Modulators das Steuersignal vorteilhaft analog übertragen werden.

Vorteilhaft kann mittels der Amplitudenmodulation das Steuersignal vorteilhaft digital übertragen werden. So kann der Modulator beispielsweise zur Pulsamplitudenmodulation ausgebildet sein.

Bevorzugt ist der Modulator zur Codemodulation, insbesondere Pulscodemodulation, ausgebildet. Der Modulator kann so vorteilhaft das Steuersignal digital übertragen, sodass vorteilhaft eine hohe Störfestigkeit der Übertragung gewährleistet werden kann. Beispielsweise ist der Modulator zum Erzeugen eines Trellis-Code ausgebildet. So kann vorteilhaft eine störfeste, digitale Übertragung erzeugt werden.

Weitere vorteilhafte digitale Modulationsverfahren, zu denen der Modulator ausgebildet sein kann, sind ASK (ASK = Amplitude-Shift-Keying), FSK (FSK = Frequency-Shift-Keying), GFSK (GFSK = Gaussian-Frequency-Shift-Keying), QPSK (QPSK = Quadature-Phase-Shift-Keying), QAM (QAM = Quadrature-Amplitude.Modulation), OFDM (OFDM = Orthogonal-Frequency-Division-Multiplex) oder VSB (VSB = Vestigial-Sideband-Modulation).

Bevorzugt ist der Modulator ein PLC-Modulator, welcher ausgebildet ist, das Steuersignal über die Versorgungsspannungsleitung zu der Leistungsendstufe zu übertragen. Der PLC-Modulator ist bevorzugt ausgebildet, das Steuersignal zu modulieren und kapazitiv über eine Kapazität, oder induktiv mittels einer Induktionsspule, in die Versorgungsspannungsleitung einzukoppeln. So kann der Modulator vorteilhaft von der Versorgungsspannungsleitung galvanisch getrennt sein.

Die Versorgungsspannungsleitung ist bevorzugt wenigstens abschnittsweise zwischen dem Leistungsmodul und der Verarbeitungseinheit ausgebildet.

Bevorzugt ist der Modulator zum Erzeugen eines redundanten Code zur Fehlerkorrektur, insbesondere Reed-Solomon-Code, ausgebildet. So kann vorteilhaft eine fehlerarme oder fehlerfreie Übertragung des Steuersignals von der Verarbeitungseinheit bis hin zur Leistungsendstufe erfolgen.

Der Modulator der Verarbeitungseinheit und der Modulator der Leistungsendstufe sind bevorzugt jeweils als Modulations-Transceiver ausgebildet. Der Modulations-Transceiver ist zum Senden des Steuersignals zur Modulation und zum Empfangen eines Signals zur Demodulation ausgebildet. Bevorzugt ist der Modulator der Verarbeitungseinheit zum Empfangen eines Statussignals ausgebildet. Bevorzugt ist das Leistungsmodul ausgebildet, ein Statussignal zu erzeugen, welches einen Status, insbesondere einen Fehlerstatus, des Leistungsmoduls repräsentiert und dieses Statussignal an den Modulations-Transceiver des Leistungsmoduls zum Übertragen an die Verarbeitungseinheit zu senden. So kann vorteilhaft das von der Verarbeitungseinheit erzeugte Steuersignal zum Ansteuern der wenigstens einen Leistungsendstufe über die Spannungsversorgungsleitung moduliert übertragen werden und ein Statussignal von dem Leistungsmodul über die Spannungsversorgungsleitung zurück zur Verarbeitungseinheit übertragen werden.

In einer bevorzugten Ausführungsform weist das Leistungsmodul wenigstens einen Temperatursensor auf, welcher ausgebildet ist, eine Temperatur des Leistungsmoduls, insbesondere der Halbleiterschalter-Halbbrücke, zu erfassen und ein die Temperatur repräsentierendes Temperatursignal zu erzeugen und das Temperatursignal an den Modulator des Leistungsmoduls auszugeben. Das Temperatursignal kann so vorteilhaft über die Spannungsversorgungsleitung an die Verarbeitungseinheit gesendet werden. Die Verarbeitungseinheit kann so beispielsweise eine Übertemperatur des Leistungsmoduls erfassen und das Steuersignal weiter vorteilhaft in Abhängigkeit des Temperatursignals erzeugen. Beispielsweise kann die Leistungsendstufe im Falle einer Übertemperatur mit einem Steuersignal angesteuert werden, welches die Leistungsendstufe durch einen kleineren Stromfluss weniger belastet oder die Leistungsendstufe kann zum Abkühlen ganz abgeschaltet werden.

In einer bevorzugten Ausführungsform weist das Leistungsmodul wenigstens einen Stromsensor auf, welcher ausgebildet ist, einen über die Halbbrücke fließenden Strom oder einen Ausgangsstrom der Halbbrücke zu erfassen und ein den erfassten Strom repräsentierendes Stromsignal zu erzeugen und das Stromsignal an den Modulator des Leistungsmoduls zu senden. So kann vorteilhaft ein Fehler, insbesondere ein Kurzschluss, der Halbleiterschalter-Halbbrücke oder ein defekter Halbleiterschalter der Halbleiterschalter-Halbbrücke erfasst werden und dieser Fehler in Form des Stromsignals an die Verarbeitungseinheit über die Spannungsversorgungsleitung übertragen werden. Die Verarbeitungseinheit kann beispielsweise in Abhängigkeit des Stromsignals die Leistungsendstufe - beispielsweise durch kein weiteres Erzeugen eines Steuersignals - abschalten.

In einer bevorzugten Ausführungsform weist das Leistungsmodul wenigstens einen Spannungssensor auf, welcher ausgebildet ist, eine über der Halbbrücke anliegende Spannung zu erfassen und ein die erfasste Spannung repräsentierendes Spannungssignal zu erzeugen und das Spannungssignal an den Modulator des Leistungsmoduls zu senden. Die Verarbeitungseinheit kann den Elektromotor in Abhängigkeit des Spannungssignals ansteuern und dazu beispielsweise einen aus dem Spannungssignal gebildeten Spannungsvektor zur Erzeugung des magnetischen Drehfeldes erzeugen.

Die Erfindung betrifft auch eine elektrische Maschine, insbesondere Elektromotor und/oder Generator mit einer Schaltungsanordnung der vorbeschriebenen Art. Die elektrische Maschine weist einen Stator und einen Rotor auf, wobei der Stator wenigstens drei Statorspulen aufweist. Bevorzugt weist die elektrische Maschine für jede Phase, insbesondere Statorspule des Stators, ein Leistungsmodul mit wenigstens einer Halbleiterschalter-Halbbrücke auf.

Die Statorspulen können bevorzugt jeweils in H-Schaltung angesteuert werden. Das Leistungsmodul für die Statorspule weist dafür bevorzugt eine H-Brücke umfassend zwei Halbleiterschalter-Halbbrücken auf, wobei an einen Ausgang der Halbleiterschalter-Halbbrücke ein Anschluss der Statorspule angeschlossen werden kann.

Die Statorspulen können anders als bei der H-Schaltung - in einer Sternschaltung angesteuert werden. Das Leistungsmodul weist bevorzugt eine Halbleiterschalter-Halbbrücke auf, welche ausgangsseitig mit einem Anschluss der Statorspule verbunden werden kann.

Die Erfindung betrifft auch ein Verfahren zum Ansteuern einer Leistungsendstufe für einen Elektromotor, bei dem ein Steuersignal, das zum Erzeugen eines magnetischen Drehfeldes ausgebildet ist, von einer Verarbeitungseinheit erzeugt wird und von der Verarbeitungseinheit an die Leistungsendstufe gesendet wird. Bevorzugt wird das Steuersignal auf ein Trägersignal moduliert, und das modulierte Trägersignal über eine Versorgungsspannungsleitung zu der Leistungsendstufe gesendet. Das modulierte Trägersignal wird in der Leistungsendstufe empfangen und zu einem empfangenen Steuersignal demoduliert, und die Leistungsendstufe mit dem so empfangenen Steuersignal zum Bestromen des Elektromotors angesteuert. Dadurch können vorteilhaft elektrische Verbindungsleitungen, insbesondere Steuerleitungen, zwischen der Verarbeitungseinheit und der Leistungsendstufe entfallen. Die Leistungsendstufe ist bevorzugt durch ein Leistungsmodul gebildet.

Die Erfindung wird nun im Folgenden anhand von Figuren und weiteren Ausführungsbeispielen beschrieben. Weitere vorteilhafte Ausführungsvarianten ergeben sich aus den in den abhängigen Ansprüchen und in den Figuren beschriebenen Merkmalen.

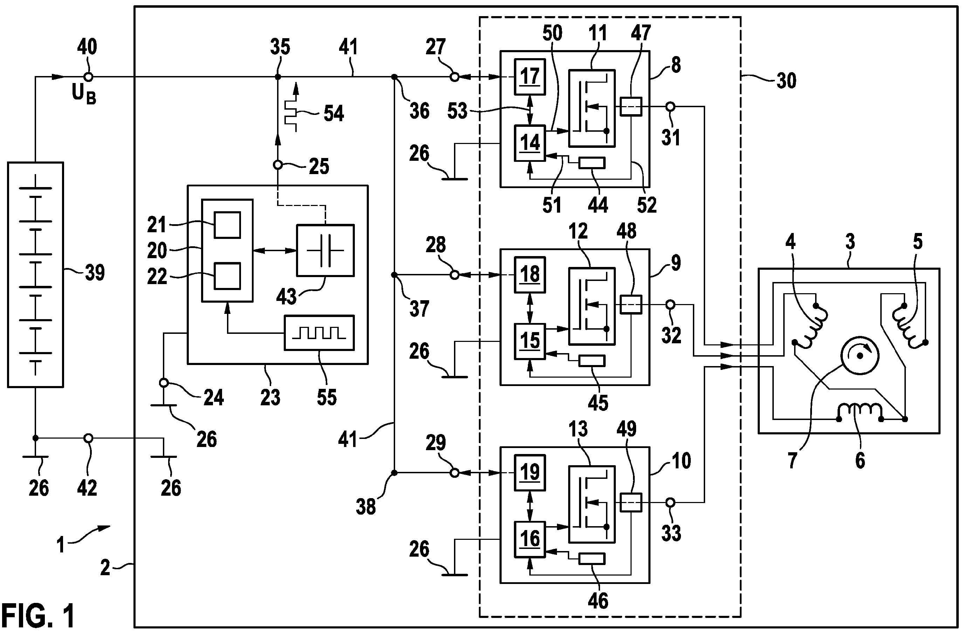

Figur 1 zeigt ein Ausführungsbeispiel für einen Elektromotor, bei dem eine Ansteuerung von Leistungsmodulen über eine PLC-Modulation erfolgt.

Figur 1 zeigt ein Ausführungsbeispiel für einen Elektromotor 1. Der Elektromotor 1 weist ein Gehäuse 2 auf, einen Stator 3, umfassend Statorspulen 4, 5 und 6, und einen Rotor 7.

Die Statorspulen 4, 5 und 6 des Stators 3 sind in diesem Ausführungsbeispiel in Sternschaltung miteinander verbunden.

Der Elektromotor 1 weist auch für jede Statorspule der Statorspulen 4, 5 und 6, welche jeweils eine Phase des Stators 3 bilden, ein Leistungsmodul auf.

Der Elektromotor 1 weist für die Statorspule 5 ein Leistungsmodul 8 auf, welches ausgangsseitig über einen Ausgang 31 mit der Statorspule 5 verbunden und ausgebildet ist, die Statorspule 5 zu bestromen.

Der Elektromotor 1 weist auch ein Leistungsmodul 9 auf, welches ausgangsseitig über einen Ausgang 32 mit der Statorspule 4 verbunden und ausgebildet ist, die Statorspule 4 zu bestromen.

Der Elektromotor 1 weist auch ein Leistungsmodul 10 auf, welches ausgangsseitig über einen Ausgang 33 mit der Statorspule 6 verbunden und ausgebildet ist, die Statorspule 6 zu bestromen.

Das Leistungsmodul 8 weist eine Halbleiterschalter-Halbbrücke 11 auf, welche eingangsseitig über eine Verbindungsleitung 50 mit einer Treibereinheit 14 verbunden ist. Die Treibereinheit 14 ist beispielsweise als Gate-Treiber ausgebildet und ist ausgebildet, die Steueranschlüsse der Halbleiterschalter der Halbleiterschalter-Halbbrücke 11 zum Durchschalten oder Sperren anzusteuern.

Die Treibereinheit 14 ist über eine bidirektionale Verbindungsleitung 53 mit einem Modulator 17 verbunden. Der Modulator 17 ist mit einem Anschluss 27 für eine Versorgungsspannung des Leistungsmoduls 8 verbunden.

Das Leistungsmodul 8 weist auch einen Temperatursensor 44 auf, welcher ausgebildet ist, eine Temperatur der Halbleiterschalter-Halbbrücke 11 zu erfassen und ein die Temperatur repräsentierendes Temperatursignal zu erzeugen. Das Leistungsmodul 8 weist auch einen Stromsensor 47 auf, welcher ausgebildet ist, einen Ausgangsstrom der Halbleiterschalter-Halbbrücke 11 zu erfassen und ein den erfassten Strom repräsentierendes Stromsignal zu erzeugen. Der Stromsensor 47 ist beispielsweise durch einen Shunt-Widerstand oder durch einen Hall-Sensor gebildet.

Die Treibereinheit 14 ist eingangsseitig über eine Verbindungsleitung 51 mit dem Temperatursensor 44 und über eine Verbindungsleitung 52 mit dem Stromsensor 47 verbunden. Die Treibereinheit 14 kann so das von dem Temperatursensor 44 empfangene Temperatursignal und das vom Stromsensor 47 empfangene Stromsignal über die Verbindungsleitung 53 an den Modulator 17 senden. Der Modulator 17, welcher in diesem Ausführungsbeispiel als Modulations-Transceiver ausgebildet ist, kann das Temperatursignal und/oder das Stromsignal mittels Modulation auf ein Trägersignal in den Anschluss 27 einkoppeln.

Der Anschluss 27 ist in diesem Ausführungsbeispiel mittels einer Spannungsversorgungsleitung 41 mit einem Anschluss 40 zum Empfangen einer Versorgungsspannung des Elektromotors 1 verbunden. Mit dem Anschluss 40 ist in diesem Ausführungsbeispiel eine Batterie 39 verbunden.

Der Elektromotor 1 weist in diesem Ausführungsbeispiel auch eine Verarbeitungseinheit 23 auf. Die Verarbeitungseinheit 23 weist einen Anschluss 25 für eine Versorgungsspannung auf. Die Versorgungsspannungsleitung 41 ist in diesem Ausführungsbeispiel auch über einen Anschluss 25 mit der Verarbeitungseinheit 23 verbunden. Zusätzlich zu dem Temperatursensor 44 und dem Stromsensor 47 kann der Elektromotor einen - nicht dargestellten - Spannungssensor aufweisen, welcher ausgebildet ist, eine an dem Leistungsmodul 8 anliegende Versorgungsspannung zu erfassen und an den Modulator 17 zu senden. Dadurch kann eine an der Halbleiterschalter-Halbbrücke 11 anliegende Versorgungsspannung erfasst werden und eine Erzeugung des Steuersignals durch die Verarbeitungseinheit 23 - insbesondre mittels einer Regelung - in Abhängigkeit des Spannungssignals erfolgen.

Das Leistungsmodul 9 weist - entsprechend dem Leistungsmodul 8 - einen Modulator 18 auf, welcher dem Modulator 17 entspricht, eine Treibereinheit 15, welche der Treibereinheit 14 entspricht, eine Halbleiterschalter-Halbbrücke 12, welche der Halbleiterschalter-Halbbrücke 11 entspricht, einen Temperatursensor 45, welcher dem Temperatursensor 44 entspricht und einen Stromsensor 48, welcher dem Stromsensor 47 entspricht.

Das Leistungsmodul 10 ist wie das Leistungsmodul 8 ausgebildet und weist eine Halbleiterschalter-Halbbrücke 13, einen Modulator 19, eine Treibereinheit 16, einen Temperatursensor 46 und einen Stromsensor 49 auf.

Die Halbleiterschalter-Halbbrücke 12 ist ausgangsseitig über einen Ausgang 32 mit der Statorspule 4 verbunden und die Halbleiterschalter-Halbbrücke 13 des Leistungsmoduls 10 ist ausgangsseitig über einen Ausgang 33 mit der Statorspule 6 verbunden.

Jeder der Statorspulen 4, 5 und 6 ist somit ein Leistungsmodul zugeordnet. Der Elektromotor 1 kann - anders als in diesem Ausführungsbeispiel dargestellt - auch vier, fünf, sechs, sieben, acht oder mehr als acht Statorspulen aufweisen, wobei der Elektromotor für jede der Statorspulen eine Halbleiterschalter-Halbbrücke beziehungsweise ein Leistungsmodul umfassend die Halbleiterschalter-Halbbrücke aufweist.

Die Leistungsmodule 8, 9 und 10 können beispielsweise zu einer die Leistungsmodule 8, 9 und 10 umfassenden Leistungsendstufe 30 zusammengefasst sein. Die Leistungsendstufe 30 kann beispielsweise in Form eines integrierten Schaltkreis, beispielsweise integrierten Mold-Moduls ausgebildet sein.

Das in Figur 1 gestrichelt dargestellte Leistungsmodul 30, umfassend die Leistungsmodule 8, 9 und 10, stellt eine Variante zu der in Figur 1 dargestellten Ausführungsform dar, bei der die Leistungsmodule 8, 9 und 10 jeweils als gesondertes Mold-Modul ausgebildet sind. Die Leistungsmodule 8, 9 und 10 können so vorteilhaft nahe bei den jeweils zugeordneten Statorspulen 4, 5 beziehungsweise 6 angeordnet sein, sodass die elektrischen Verbindungsleitungen von dem Ausgang des Leistungsmoduls, bis hin zu einem Anschluss der Statorspule, besonders kurz, und so verlustarm, ausgeführt sein können.

Das Leistungsmodul 9 ist über einen Anschluss 28, in diesem Ausführungsbeispiel weiter über einen Verbindungsknoten 37, mit der Spannungsversorgungsleitung 41 verbunden. Der Anschluss 29 für eine Versorgungsspannung des Leistungsmoduls 10 ist über einen Verbindungsknoten 38 mit der Spannungsversorgungsleitung 41 verbunden. Die Leistungsmodule 8, 9 und 10 können so über die Anschlüsse 27, 28 beziehungsweise 29 die Versorgungsspannung von der Batterie 39 über den Anschluss 40 empfangen.

Die Verarbeitungseinheit 23 weist einen Anschluss 25 zum Empfangen einer Versorgungsspannung auf und ist über den Anschluss 25 und weiter über den Verbindungsknoten 35 mit der Spannungsversorgungsleitung 41 verbunden. Die Verarbeitungseinheit 23 weist einen Pulsweitenmodulator 55 und einen Modulator 20 auf. Der Modulator 20 ist in diesem Ausführungsbeispiel als Modulations-Transceiver ausgebildet und weist dazu einen Sender 21 und einen Empfänger 22 auf. Der Sender 21 ist zum Modulieren eines Trägersignals ausgebildet und der Empfänger 22 ist zum Demodulieren eines modulierten Trägersignals ausgebildet.

Der Pulsweitenmodulator 55 ist ausgebildet, ein Steuersignal, insbesondere Gate-Steuersignal zum Ansteuern der Halbleiterschalter-Halbbrücken 11, 12 und 13 zum Bestromen der Statorspulen 4, 5 und 6, und so zum Erzeugen eines magnetischen Drehfeldes, zum Drehbewegen des Rotors 7 ausgebildet. Der Pulsweitenmodulator 55 ist ausgangsseitig mit dem Modulator 20 verbunden. Das von dem Modulator 20 empfangene Steuersignal kann mittels des Senders 21 auf ein Trägersignal aufmoduliert werden und ausgangsseitig - über ein Koppelelement 43 - in die Spannungsversorgungsleitung 41 über den Anschluss 25 eingekoppelt werden. Das Koppelelement 43 ist beispielsweise durch ein kapazitives Koppelelement, insbesondere einen Kondensator, ausgebildet. In einer anderen Ausführungsform ist das Koppelelement 43 durch ein induktives Koppelelement, beispielsweise eine Ringspule, ausgebildet. Die Ringspule ist beispielsweise um eine von dem Anschluss 25 ins Innere der Verarbeitungseinheit 23 geführte Versorgungsspannungsleitung gewickelt ausgebildet.

Mittels des Koppelelements 43 kann das Steuersignal von der Versorgungsspannungsleitung galvanisch entkoppelt in die Versorgungsspannungsleitung 41 eingeprägt werden.

Das Steuersignal 54 kann dann auf das Trägersignal aufmoduliert, über den Anschluss 27 von dem Modulator 17 empfangen und mittels des Modulators 17 demoduliert werden. Das Steuersignal kann dann von dem Modulator 17 über die Verbindungsleitung 53 an die Treibereinheit 14 gesendet werden. Die Treibereinheit 14 kann über die Verbindungsleitung 50 die Steueranschlüsse der Halbleiterschalter-Halbbrücke 11 mit dem Steuersignal 54 ansteuern. Die Halbleiterschalter-Halbbrücken 12 und 13 können - wie die Halbleiterschalter-Halbbrücke 11 - das Steuersignal 54 oder ein für die Halbleiterschalter-Halbbrücke 12 beziehungsweise 13 bestimmtes Steuersignal über die Versorgungsspannungsleitung 41 und über den Modulator 18 beziehungsweise 19 empfangen und mittels des entsprechenden Steuersignals angesteuert werden.

Mittels des so ausgebildeten Elektromotors 1 können vorteilhaft eine Vielzahl von Steuerleitungen, beispielsweise der Steuerleitungen zum Ansteuern der Steueranschlüsse, und weiter die Signalleitungen von den Sensoren, in diesem Ausführungsbeispiel der Temperatursensoren 44, 45 und 46, und der Stromsensoren 47, 48 und 49, zwischen der Verarbeitungseinheit 23 und den Leistungsmodulen 8, 9 und 10 entfallen. Auf diese Weise kann ein hoher Verdrahtungsaufwand, welcher ein Signalleitungsrisiko durch Defektstellen an Steckkontakten mit sich bringt, entfallen beziehungsweise reduziert werden. Die Leistungsmodule 8, 9 und 10 sind in diesem Ausführungsbeispiel nur noch über die Spannungsversorgungsanschlüsse 27, 28 beziehungsweise 29 mit der Verarbeitungseinheit 23 verbunden. Die Leistungsmodule 8, 9 und 10 sind jeweils mit einem Masseanschluss 26 verbunden. Die Verarbeitungseinheit 23 ist in diesem Ausführungsbeispiel über einen Massekontakt 24 mit dem Masseanschluss 26 verbunden. Der Elektromotor 1 ist über einen Massekontakt 42 mit dem Masseanschluss 26 verbunden. Die Batterie 39 ist - insbesondere mit einem Minuspol - mit dem Masseanschluss 26 verbunden.

Der Elektromotor 1 weist in diesem Ausführungsbeispiel auch ein Gehäuse 2 auf, welches die Verarbeitungseinheit 23, die Versorgungsspannungsleitung 41, die Leistungsmodule 8, 9 und 10 und den Stator 3 umschließt.

In einer anderen Ausführungsform umschließt das Gehäuse 2 die zuvor genannten Komponenten, ohne den Stator 3.

Das Gehäuse 2 kann beispielsweise mit dem Masseanschluss 26 elektrisch verbunden und als Metallgehäuse ausgebildet sein. Das Gehäuse 2 kann so als elektrische Abschirmung dienen, sodass die Spannungsversorgungsleitung 41, auf die das Steuersignal aufmoduliert werden kann, nicht als Sendeantennenstörsignale aussenden kann, die andere elektrische Komponenten - beispielsweise in einem Fahrzeug - oder einen Rundfunkempfang stören kann.

Die Verarbeitungseinheit 23 kann beispielsweise als Mold-Modul ausgebildet sein. Die Verarbeitungseinheit 23 weist beispielsweise einen Mikroprozessor, einen Mikrocontroller, ein FPGA oder ein ASIC auf.

## Patentansprüche

1. Schaltungsanordnung zum Ansteuern einer elektrischen Maschine (1), insbesondere Elektromotor und/oder Generator, wobei die Schaltungsanordnung wenigstens ein Leistungsmodul (8, 9, 10) und eine Verarbeitungseinheit (23) aufweist, wobei das Leistungsmodul (8, 9, 10) wenigstens eine Halbleiterschalter-Halbbrücke (11, 12, 13) aufweist, welche mit einem Ausgangsanschluss (31, 32, 33) für eine Statorspule (4, 5, 6) verbunden ist, und die Verarbeitungseinheit (23) ausgebildet ist, die Halbleiterschalter-Halbbrücken (11, 12, 13) zum Bestromen eines Stators (3) der elektrischen Maschine (1) zum Erzeugen eines magnetischen Drehfeldes anzusteuern, und dazu wenigstens ein Steuersignal (54) oder eine zeitliche Folge von Steuersignalen (54) zu erzeugen,
**dadurch gekennzeichnet, dass**
die Verarbeitungseinheit (23) mit dem Leistungsmodul (8, 9, 10) über eine Spannungsversorgungsleitung (41) verbunden ist, und die Schaltungsanordnung einen mit der Verarbeitungseinheit (23) verbundenen Modulator (20) aufweist, welcher ausgebildet ist, ein Trägersignal zu erzeugen und das Steuersignal (54) auf das Trägersignal aufzumodulieren und das aufmodulierte Trägersignal in die Spannungsversorgungsleitung (41) einzuspeisen, wobei die Schaltungsanordnung wenigstens einen mit dem Leistungsmodul (8, 9, 10) verbundenen Modulator (17, 18, 19) aufweist, welcher ausgebildet ist, das Steuersignal (54) aus dem aufmodulierten Trägersignal zu demodulieren und an die Halbleiterschalter-Halbbrücke (11, 12, 13) zu senden, wobei der Modulator (17, 18, 19, 20) zur Amplituden-Modulation ausgebildet ist.

2. Schaltungsanordnung nach Anspruch 1,
**dadurch gekennzeichnet, dass**
der Modulator (17, 18, 19, 20) zur Code-Modulation ausgebildet ist.

3. Schaltungsanordnung nach einem der vorhergehenden Ansprüche,
**dadurch gekennzeichnet, dass**
der Modulator (17, 18, 19, 20) ein PLC-Modulator ist, welcher ausgebildet ist, das Steuersignal über eine Versorgungsspannungsleitung (41) zu der Leistungsendstufe zu übertragen.

4. Schaltungsanordnung nach einem der vorhergehenden Ansprüche,
**dadurch gekennzeichnet, dass**
der Modulator (20) der Verarbeitungseinheit (23) und der Modulator (17, 18, 19) der Leistungsendstufe (8, 9, 10) ein Modulations-Transceiver ist, welcher zum Senden des Steuersignals zur Modulation und zum Empfangen eines Signals, insbesondere Statussignals, zur Demodulation ausgebildet ist.

5. Schaltungsanordnung nach Anspruch 4,
**dadurch gekennzeichnet, dass**
das Leistungsmodul (8, 9, 10) wenigstens einen Temperatursensor (44, 45, 46) aufweist, welcher ausgebildet ist, eine Temperatur des Leistungsmoduls (8, 9, 10), insbesondere der Halbleiterschalter-Halbbrücke (11, 12, 13) zu erfassen und ein die Temperatur repräsentierendes Temperatursignal zu erzeugen und das Temperatursignal an den Modulator (18, 18, 19) des Leistungsmoduls (8, 9, 10) auszugeben.

6. Schaltungsanordnung nach Anspruch 4 oder 5,
**dadurch gekennzeichnet, dass**
das Leistungsmodul (8, 9, 10) wenigstens einen Stromsensor (47, 48, 49) aufweist, welcher ausgebildet ist, einen über die Halbleiterschalter-Halbbrücke (11, 12, 13) fließenden Strom oder Ausgangsstrom der Halbleiterschalter-Halbbrücke (11, 12, 13) zu erfassen und ein Stromsignal zu erzeugen und das Stromsignal an den Modulator (17, 18, 19) des Leistungsmoduls (8, 9, 10) zu senden.

7. Elektrische Maschine (1) mit einer Schaltungsanordnung nach einem der vorhergehenden Ansprüche, wobei die elektrische Maschine (1) einen Stator (3) und einen Rotor (7) aufweist, wobei der Stator (3) wenigstens drei Statorspulen (4, 5, 6) aufweist, und die Schaltungsanordnung für jede Statorspule (4, 5, 6) ein Leistungsmodul (8, 9, 10) aufweist, das ausgangsseitig mit der Statorspule (4, 5, 6) verbunden ist.

8. Elektrische Maschine (1) nach Anspruch 7,
**dadurch gekennzeichnet, dass**
für jedes Leistungsmodul (8, 9, 10) einen wenigstens zur Demodulation ausgebildeten Modulator (17, 18, 19) aufweist.

9. Verfahren zum Ansteuern einer Leistungsendstufe (30) für einen Elektromotor (1),
bei dem ein Steuersignal (54), das zum Erzeugen eines magnetischen Drehfeldes ausgebildet ist, von einer Verarbeitungseinheit (23) erzeugt wird und von der Verarbeitungseinheit (23) an die Leistungsendstufe (30) gesendet wird,
**dadurch gekennzeichnet, dass**
das Steuersignal (54) auf ein Trägersignal moduliert wird und das modulierte Trägersignal über eine Versorgungsspannungsleitung (41) zu der Leistungsendstufe (30) gesendet wird und das modulierte Trägersignal in der Leistungsendstufe empfangen und zu einem empfangenen Steuersignal (54) demoduliert wird und die Leistungsendstufe (30) mit dem so empfangenen Steuersignal (54) zum Bestromen des Elektromotors (1) angesteuert wird, wobei eine Amplituden-Modulation genutzt wird.

## Claims

1. Circuit arrangement for actuating an electric machine (1), in particular an electric motor and/or generator, wherein the circuit arrangement has at least one power module (8, 9, 10) and a processing unit (23), wherein the power module (8, 9, 10) has at least one semiconductor switch half-bridge (11, 12, 13), which is connected to an output connection (31, 32, 33) for a stator coil (4, 5, 6), and the processing unit (23) is designed to actuate the semiconductor switch half-bridges (11, 12, 13) to energize a stator (3) of the electric machine (1) to generate a magnetic rotating field, and to this end to generate at least one control signal (54) or a temporal sequence of control signals (54),
**characterized in that**
the processing unit (23) is connected to the power module (8, 9, 10) via a voltage supply line (41), and the circuit arrangement has a modulator (20), which is connected to the processing unit (23) and which is designed to generate a carrier signal and to modulate the control signal (54) onto the carrier signal and to feed the modulated carrier signal into the voltage supply line (41), wherein the circuit arrangement has at least one modulator (17, 18, 19), which is connected to the power module (8, 9, 10) and which is designed to demodulate the control signal (54) from the modulated carrier signal and to transmit same to the semiconductor switch half-bridge (11, 12, 13), wherein the modulator (17, 18, 19, 20) is designed for amplitude modulation.

2. Circuit arrangement according to Claim 1,
**characterized in that**
the modulator (17, 18, 19, 20) is designed for code modulation.

3. Circuit arrangement according to either of the preceding claims,
**characterized in that**
the modulator (17, 18, 19, 20) is a PLC modulator, which is designed to transmit the control signal to the power end stage via a supply voltage line (41).

4. Circuit arrangement according to one of the preceding claims,
**characterized in that**
the modulator (20) of the processing unit (23) and the modulator (17, 18, 19) of the power end stage (8, 9, 10) is a modulation transceiver, which is designed to transmit the control signal for modulation and to receive a signal, in particular a status signal, for demodulation.

5. Circuit arrangement according to Claim 4,
**characterized in that**
the power module (8, 9, 10) has at least one temperature sensor (44, 45, 46), which is designed to detect a temperature of the power module (8, 9, 10), in particular of the semiconductor switch half-bridge (11, 12, 13), and to generate a temperature signal that represents the temperature and to output the temperature signal to the modulator (18, 18, 19) of the power module (8, 9, 10).

6. Circuit arrangement according to Claim 4 or 5,
**characterized in that**
the power module (8, 9, 10) has at least one current sensor (47, 48, 49), which is designed to detect a current flowing via the semiconductor switch half-bridge (11, 12, 13) or an output current of the semiconductor switch half-bridge (11, 12, 13) and to generate a current signal and to transmit the current signal to the modulator (17, 18, 19) of the power module (8, 9, 10).

7. Electric machine (1) having a circuit arrangement according to one of the preceding claims, wherein the electric machine (1) has a stator (3) and a rotor (7), wherein the stator (3) has at least three stator coils (4, 5, 6), and the circuit arrangement has a power module (8, 9, 10) for each stator coil (4, 5, 6), said power module being connected on the output side to the stator coil (4, 5, 6).

8. Electric machine (1) according to Claim 7,
**characterized in that**
for each power module (8, 9, 10) has a modulator (17, 18, 19) designed at least for demodulation.

9. Method for actuating a power end stage (30) for an electric motor (1),
in which a control signal (54), which is designed to generate a magnetic rotating field, is generated by a processing unit (23) and is transmitted from the processing unit (23) to the power end stage (30),
**characterized in that**
the control signal (54) is modulated onto a carrier signal and the modulated carrier signal is transmitted to the power end stage (30) via a supply voltage line (41) and the modulated carrier signal is received in the power end stage and is demodulated to form a received control signal (54) and the power end stage (30) is actuated by way of the thus received control signal (54) to energize the electric motor (1), wherein an amplitude modulation is used.

## Revendications

1. Dispositif de commutation destiné à commander une machine électrique (1), notamment un moteur électrique et/ou un générateur, dans lequel le dispositif de commutation comporte au moins un module de puissance (8, 9, 10) et une unité de traitement (23), dans lequel le module de puissance (8, 9, 10) comporte au moins un demi-pont à commutateurs à semiconducteur (11, 12, 13) qui est relié à une borne de sortie (31, 32, 33) pour une bobine de stator (4, 5, 6), et l'unité de traitement (23) est configurée pour commander les demi-ponts à commutateurs à semiconducteur (11, 12, 13) afin d'alimenter en courant un stator (3) de la machine électrique (1) en vue de générer un champ magnétique tournant, et pour générer à cet effet au moins un signal de commande (54) ou une séquence temporelle de signaux de commande (54), **caractérisé en ce que**
l'unité de traitement (23) est reliée au module de puissance (8, 9, 10) par le biais d'une ligne d'alimentation en tension (41), et le dispositif de commutation comporte un modulateur (20) relié à l'unité de traitement (23), lequel est configuré pour générer un signal porteur et moduler le signal de commande (54) sur le signal porteur, puis pour injecter le signal porteur modulé dans la ligne d'alimentation en tension (41), dans lequel le dispositif de commutation comporte au moins un modulateur (17, 18, 19) relié au module de puissance (8, 9, 10), lequel est configuré pour démoduler le signal de commande (54) à partir du signal porteur modulé et l'envoyer au demi-pont à commutateurs à semiconducteur (11, 12, 13), dans lequel le modulateur (17, 18, 19, 20) est configuré pour une modulation d'amplitude.

2. Dispositif de commutation selon la revendication 1, **caractérisé en ce que**
le modulateur (17, 18, 19, 20) est configuré pour une modulation de code.

3. Dispositif de commutation selon l'une des revendications précédentes, **caractérisé en ce que**
le modulateur (17, 18, 19, 20) est un modulateur PLC qui est configuré pour transmettre le signal de commande par le biais d'une ligne d'alimentation en tension (41) à l'étage de sortie de puissance.

4. Dispositif de commutation selon l'une des revendications précédentes, **caractérisé en ce que**
le modulateur (20) de l'unité de traitement (23) et le modulateur (17, 18, 19) de l'étage de sortie de puissance (8, 9, 10) sont un émetteur-récepteur de modulation qui est configuré pour émettre le signal de commande en vue d'une modulation et pour recevoir un signal, en particulier un signal d'état, en vue d'une démodulation.

5. Dispositif de commutation selon la revendication 4, **caractérisé en ce que**
le module de puissance (8, 9, 10) comporte au moins un capteur de température (44, 45, 46) qui est configuré pour détecter une température du module de puissance (8, 9, 10), notamment du demi-pont à commutateurs à semiconducteur (11, 12, 13), et générer un signal de température représentant la température, puis délivrer le signal de température au modulateur (18, 18, 19) du module de puissance (8, 9, 10).

6. Dispositif de commutation selon la revendication 4 ou 5, **caractérisé en ce que**
le module de puissance (8, 9, 10) comporte au moins un capteur de courant (47, 48, 49) qui est configuré pour détecter un courant ou un courant de sortie du demi-pont à commutateurs à semiconducteur (11, 12, 13), qui passe à travers le demi-pont à commutateurs à semiconducteur (11, 12, 13) et pour générer un signal de courant, puis pour transmettre le signal de courant au modulateur (17, 18, 19) du module de puissance (8, 9, 10).

7. Machine électrique (1) comprenant un dispositif de commutation selon l'une des revendications précédentes, dans lequel la machine électrique (1) comporte un stator (3) et un rotor (7), dans lequel le stator (3) comporte au moins trois bobines de stator (4, 5, 6), et le dispositif de commutation comporte, pour chaque bobine de stator (4, 5, 6), un module de puissance (8, 9, 10) qui est relié côté sortie à la bobine de stator (4, 5, 6).

8. Machine électrique (1) selon la revendication 7, **caractérisée en ce que**
pour chaque module de puissance (8, 9, 10) comporte un modulateur (17, 18, 19) configuré au moins pour une démodulation.

9. Procédé de commande d'un étage de sortie de puissance (30) destiné à un moteur électrique (1),
dans lequel un signal de commande (54), qui est configuré pour générer un champ magnétique tournant, est généré par une unité de traitement (23) et est envoyé par l'unité de traitement (23) à l'étage de sortie de puissance (30), **caractérisé en ce que**
le signal de commande (54) est modulé sur un signal porteur et le signal porteur modulé est envoyé par le biais d'une ligne d'alimentation en tension (41) à l'étage de sortie de puissance (30) et le signal porteur modulé est reçu dans l'étage de sortie de puissance et est démodulé en un signal de commande reçu (54), et l'étage de sortie de puissance (30) est commandé avec le signal de commande (54) ainsi reçu pour alimenter en courant le moteur électrique (1), dans lequel une modulation d'amplitude est utilisée.
